Europäisches Patentamt

European Patent Office

Office européen des brevets

(19)

(11) EP 0 211 362 B2

(12) **NEUE EUROPÄISCHE PATENTSCHRIFT**

(45) Veröffentlichungstag und Bekanntmachung des Hinweises auf die Entscheidung über den Einspruch:
**07.08.1996 Patentblatt 1996/32**

(45) Hinweis auf die Patenterteilung:
**29.08.1990 Patentblatt 1990/35**

(21) Anmeldenummer: **86110325.7**

(22) Anmeldetag: **26.07.1986**

(51) Int Cl.⁶: **C04B 28/06**, C04B 28/04, C04B 41/50
// (C04B28/06, 22:00, 22:06, 22:10, 22:14, 24:06),
(C04B28/04, 22:00, 22:06, 22:10, 22:14, 24:06)

(54) **Mischung zur Herstellung schnellerhärtender Mörtel für Putze und Ausbesserungen**

Mixture for producing quickly hardening mortars for stuccoes and repairs

Mélange pour la fabrication de mortiers à durcissement rapide pour stucs et réparations

(84) Benannte Vertragsstaaten:
**AT BE CH DE FR GB IT LI LU NL SE**

(30) Priorität: **03.08.1985 DE 3527981**

(43) Veröffentlichungstag der Anmeldung:
**25.02.1987 Patentblatt 1987/09**

(73) Patentinhaber: **SICOWA Verfahrenstechnik für Baustoffe GmbH & Co. KG**
**D-52072 Aachen (DE)**

(72) Erfinder: **Koslowski, Thomas, Dr.**
**D-5100 Aachen (DE)**

(74) Vertreter: **Sparing Röhl Henseler Patentanwälte**
**Postfach 14 04 43**
**40074 Düsseldorf (DE)**

(56) Entgegenhaltungen:
EP-A- 0 143 633    EP-A- 0 151 452
DE-A- 3 215 777    DE-C- 2 857 396
FR-A- 1 452 567    FR-A- 2 289 460
GB-A- 2 033 367    US-A- 3 997 353

- CHEMICAL ABSTRACTS, Band 84, Nr. 12, 22. März 1976, Seite 316, Zusammenfassung Nr. 78744z, Columbus, Ohio, US; & JP-A-75 16 718 (DENKI KAGAKU KOGYO K.K.) 21-02-1975
- M. Balsevics, Dissertation, TH Aachen (1986)

Bemerkungen:
Die Akte enthält technische Angaben, die nach dem Eingang der Anmeldung eingereicht wurden und die nicht in dieser Patentschrift enthalten sind.

EP 0 211 362 B2

**Beschreibung**

Die Erfindung betrifft eine Mischung zur Herstellung schnellerhärtender Mörtel für Putze und Ausbesserungen, enthaltend Bindemittel, übliche Zuschläge und Zusätze.

Aus der FR-PS 22 33 295 ist es bekannt, einerseites ein Zement-, Mörtel- oder Betongemisch und andererseits einen Wirkstoff zur Schnellerstarrung in Form eines Pulvers oder einer Suspension aus Calciumaluminat und anorganischem Sulfat herzustellen, wobei die sich durch Vermischen hiervon ergebende Rohmischung sofort zu verarbeiten ist. Der Wirkstoff kann einen Carboxylsäureverzögerer als auch einen Beschleuniger, der etwa auch geringe Mengen an Kalkhydrat aufweisen kann, enthalten. Der Wirkstoff soll möglichst mindestens eine halbe Stunde nicht erstarren, jedoch bei Vermischung mit dem Zement-, Mörtel- oder Betongemisch sehr rasch zu dessen Erstarrung führen, es wird ein Ansteifen in wenigen Minuten, z.B. zwischen 5 und 10 min., angestrebt. Nachteilig ist es, daß getrennt zwei Mischungen hergestellt werden müssen, die anschließend miteinander zu mischen sind, wonach sich nur eine sehr geringe Verarbeitungszeit und eine hohe Temperaturempfindlichkeit ergibt. Die Frühfestigkeit beruht auf Ettringitbildung und erfolgt relativ langsam im Stundenbereich.

Mörtel für Ausbesserungen werden beispielsweise zur Betonsanierung verwendet, wobei Abplatzungen des Betons, die bis zur Stahlbewehrung reichen können, ausgebessert werden. Hierbei ist es wichtig, einen kraftschlüssigen Verbund zum Altbeton herzustelle, wobei die Ausbesserungsplombe nicht fester sein darf als der Untergrund und außerdem im allgemeinen eine Stärke von etwa 2 bis 4 cm aufweist, so daß man im Sandbereich mit hohem Bindemittelanteil arbeiten muß, wodurch sich ein hohes Schwindverhalten ergibt, das dazu führen kann, dß die Ausbesserungsplombe reißt oder wieder herausfällt. Außerdem ist für eine größerflächige Ausbesserung ebenso wie bei Ausbesserungen von Straßen, Landepiston o.dgl. eine schnelle Erhärtung erwünscht.

Bei mehrschichtigen Putzen kann die nächste Schicht erst aufgetragen werden, wenn der Unterputz eine genügende Tragfähigkeit aufweist, so daß es erwünscht ist, eine schnelles Früherhärten des Putzes zu erzielen, um möglichst bald die nächste Schicht aufbringen zu können. Außerdem sollen sich hierbei die einzelnen Putzschichten hinsichtlich Formveränderung etwa durch Schwinden, Kontraktionen oder Expansionen durch Temperaturänderungen o. dgl. beeinträchtigen. Entsprechendes gilt für das Aufbringen einer Putzschicht auf einen insbesondere wärmedämmenden und/oder stark Wasser aufsaugenden Untergrund.

Aufgabe der Erfindung ist es daher, eine Fertigmischung zur Herstellung eines Mörtels für Putze und Ausbesserungen zu schaffen, die nach dem Anmachen mehrere Stunden verarbeitbar ist, schnell erhärtet und deren Formänderungen insbesondere im Frühbereich keine Schäden hinterlassen:

Diese Aufgabe wird gelöst durch eine Mischung zur Herstellung schnellerhärtender Mörtel für Putze und Ausbesserungen, enthaltend Bindemittel, übliche Zuschläge und Zusätze, gekennzeichnet durch einen Gehalt an

a. 10 bis 40 Gew.-Teilen reaktive Calciumsilikate,
b. 3 bis 8, insbesondere 3 bis 7 Gew.-Teilen reaktive Aluminate, berechnet als CA,
c. 0,8 bis 5 Gew.-Teilen Calciumhydroxid,
d. 0,05 bis 2, insbesondere 0,2 bis 2 Gew.-TeilenCalciumsulfathalbhydratund/oder-anhydrit-III,
e. 0,4 bis 6,5 Gew.-Teilen Calciumsulfatanhydrit-II,
f. 0,03 bis 0,5 Gew.-Teilen anorganischem, die Keimbildung und das Wachstum von Calciumaluminatsulfathydrat hemmendem Abbindeverzögerer,

wobei das Verhältnis der Komponenten b:c kleiner als 5 ist,

derart, daß eine Reaktions kette über die folgenden Reaktionsprodukt: Primärettringit, Monophasen (Calciumaluminatmonosulfat), Sekundärettringit und Calciumhydrosilikat abläuft.

Vorzugsweise enthält die Mischung
15 bis 30, insbesondere 15 bis 25 Gew.-Teile reaktive Calciumsilikate und/oder
4 bis 7, insbesondere 4 bis 6 Gew.-Teile reaktive Aluminate, berechnet als CA, und/oder
1,3 bis 4 Gew.-Teile Calciumhydroxid und/oder
0,1 bis 1, insbesondere 0,5 bis 1, bzw. 0,1 bis 1,5, insbesondere 0,5 bis 1,5 Gew.-Teile Calciumsulfathalbhydrat bzw. -anhydrit-III für Mörtel für Ausbesserungen bzw. Putze und/oder
0,8 bis 2 bzw. 1,2 bis 5, insbesondere 1,5 bis 5 Gew.-Teile Calciumsulfatanhydrit-II für Mörtel für Ausbesserungen bzw. Putze und/oder
0,05 bis 0,2, insbesondere bis 0,15 Gew.-TeileorganischenAbbindeverzögerer.

Mit einer derartigen Mörtelmischung wird eine ausrechende Verbundfestigkeit auf dem Untergrund erhalten, weitere oder Dekorschichten können auf dem herstellten Putz aufgebracht werden, der Putz besitzt hierzu eine genügende Tragfestigkeit. Ferner lassen sich Putze aus einer derartigen Mörtelmischung mit genügend hohen Druck- und Schlagfestigkeiten erzielen. Im hergstellten Putz ergeben sich nur geringe eigene Zugspannungen infolge des erzeilten geringen Schwindmaßes im Früh- und Langszeitbereich. Thermische Formänderungen des Untergrundes im Frühbereich werden aufgenommen.

Mit einer derartigen Mörtelmischung lassen sich Topfzeiten von mehreren Stunden, beispielsweise 2 bis 4 Stunden für Putze und 1 bis 2 Stunden für Ausbesserungsmörtel, einstellen. Die Topfzeit läßt sich durch entsprechende Menge an Calciumsulfathalbhydrat und organischem Abbindeverzögerer variieren. Letzterer wird vorzugsweise in einer Menge von 0,05 bis 0,15 Gewichtsteilen verwendet. Als Calciumsulfathalbhydrat eignet sich beispielsweise Stuckgips, als organischer Abbindeverzögerer eignet sich beispielsweise eine Oxycarbonsäure, etwa Wein-, Apfel-, Glukon- oder Zitronensäure sowie deren Salze. Und zwar eignen sich solche organischen Abbindeverzögerer, die eine hohe Löslichkeit in Wasser, eine hohe Lösungsgeschwindigkeit aufweisen, sowie schwerlösliche Salze mit Calcium bzw. Aluminium bilden. Insbesondere Eignet sich Zitronensäuremonohydrat. Die Säuren bzw. deren Salze können auch in Mischung verwendet werden. Da es sich um eine Fertigmörtelmischung handelt, versteht, es sich, daß die organischen Abbindeverzögerer pulverförmig in der Mörtelmischung enthalten sind.

Für die Topfzeit des angemachten Mörtels ist eine Mindestmenge an Calciumsulfathalbhydrat wegen der hohen Lösungsgeschwindigkeit und Löslichkeit hiervorn notwendig, jedoch sollte die Menge an Halbhydrat andererseits auch so gering wie möglich gehalten werden. Das Halbhydrat kann auch gegebenenfalls ganz oder teilweise durch Anhydrit-III, ersetzt werden, der ebenfalls eine sehr hohe Lösungsgeschwindigkeit und Löslichkeit in Wasser aufweist. Für die Einstellung der Topfzeit ist Anhydrit-II ungeeignet, während das Dihydrat nur geringen Einfluß ausüben kann.

Durch die Schnellerhärtung nach Beendigung der Topfzeit ergibt sich sehr schnell eine hohe Frühfestigkeit infolge einer steilen Erstarrungscharakteristik. Im Frühbereich finden vorrangig die Reaktionen der reaktiven Aluminate mit Calciumhydroxid und weiter mit Anhydrit-II statt. Die sich hierbei bildenden Reaktionsprodukte sind zunächst Monophasen (Calciumaluminatmonosulfat) und später Ettringit, der nadelförmig und langprismatisch ausgebildet ist. Zusätzlich verstärkt sich der Einfluß der sich verspätet bildenden Calciumhydrosilikate. Durch diese Vorgänge werden praktisch in zwei Stufen die Formänderungen im Frühbereich gesteuert. Durch Einstellung des Verhältnisses der reaktiven Aluminate zu den reaktiven Calciumsilikaten, zum Calciumhydroxid und zum Anhydrit-II lassen sich diese Formänderungen im Fühbereich steuern, und zwar vorzugweise derart, daß zunächst durch Ausbildung der plättchenförmigen Monophasen eine Volumenexpansion (das Druckspannungen erzeugt) in einer ersten Stufe stattfindet, das dem Schwinden (das Zugspannungen erzeugt) während dieses Zeitraumes entgegenwirkt, während anschließend durch die Ettringitbildung eine Volumenexpansion in einer weiteren Stufe stattfindet, das dem normalerweise auftretenden Schwinden während dieses Zeitraumes entgegenwirkt. Es läßt sich auch eine absolute Volumenvergrößerung des Mörtels durch entsprechende Wahl der Gewichtsteile einstellen.

Die Endfestigkeit des erhaltenen Putzes ergibt sich hauptsächlich durch die Reaktion der reaktiven Calciumsilikate mit Wasser, hierbei bilden sich CSH-Phasen. Durch Veränderung des Verhältnisses der reaktiven Calciumsilikate zu den reaktiven Aluminaten werden auch die Endfestigkeiten beeinflußt und können hierdurch entsprechend eingestellt werden.

Der Anhydrit-II spielt bei der Steuerung der Schnellerstarrung infolge seiner Reaktionsträgheit nur eine untergeordnete Rolle. Während das Halbhydrat bei der Bildung von Primärettringit und der Monophasen verbraucht wird, bleibt der Anhydrit-II größtenteils erhalten und kann nun, nachdem die Aluminate ausreagiert sind, mit den vergleichsweise Al-reichen und $SO_4$-armen Monophasen und nicht reagiertem Restaluminat zu dem $SO_4$-reicheren Sekundämringit, der durch seinen langstrahligen, faserigen Habitus ein sehr günstiges Verfilzen und Verwachsen der Restmonophasen und der übrigen Restkomponenten bewirkt, gemäß folgender Reaktion reagieren

$$C_3ACs \cdot H_{12}+2Cs+2OH \rightarrow C_3A3Cs \cdot H_{32}$$

Die Sekundärettringitbildung ist mit einem weiteren Festigkeitsanstieg verbunden.

Anhydrit-II kann mit einer Blaine-Oberfläche von 1000 bis 10000 $cm^2/g$, insbesondere 3000 bis 8000 $cm^2/g$, verwendet werden, gewöhnlich wird er in Zementfeinheit bis Kalkhydratfeinheit verwendet.

Sowohl Zitronensäure (oder die ansonsten verwendete organischen Verbindung) als auch Halbhydrat und Anhydrit stellen Abbindeverzögerer für reaktives Aluminat-etwa vom Tonerdezement-dar (ggf. kann Sulfat aber auch die Reaktion von einem Tonerdezement beschleunigen), wirken jedoch alleine nicht in kalkhydratreichen Systemen, da sie dann das rekative Aluminat nicht genügend gegen das Kalkhydrat abschirmen und dadurch auch keine Abhindeverzögerung herbeiführen können. Überraschenderweise hat es sich jedoch geziegt, daß durch die Kombination beider Abbindeverzögerer reaktives Aluminat auch in kalkhydratreicher Umgebung, d.h. in solcher Umgebung, in der vorzugsweise wenigstens etwa 30% des zur stöchiometrischen Reaktion mit dem Aluminat erforderlichen Kalkhydrats (als solches zugegeben oder durch Löschen von Branntkalk im angemachten Mörtel in der Anfangsphase fortlaufend entstehend) vorhanden ist, in gewünschter Weise verzögert werden kann.

Die reaktiven Calciumsilikate, die vorzugsweise in einer Menge von 15 bis 25 Gewichtsteilen enthalten sind, umfassen $C_3S$, $C_2S$ und $C_2AS$. Als reaktive Aluminate, die vorzugsweise in einer Menge von 4 bis 6 Gewichtsteilen vorhanden sind, eignen sich $C_3A$, $CA$, $C_{12}A_7$ und $C_4AF$ (letzterer ist aber weniger reaktiv als die vorstehenden). Als reaktive Aluminate können CA bzw. $C_{12}A_7$ alleine oder in Kombination und mit den übrigen aufgeführten Aluminaten verwendet werden, jedoch ist eine CA- oder $C_{12}A_7$-Komponente erfordlicher, da nur diese mit Kalkhydrat zu Monophasen und Ettringit reagieren können. $C_{12}A_7$ kann fluorstabilisiert sein. Stattdessen oder zusammen mit den aufgeführten reaktiven Aluminaten kann auch schwer lösliches Aluminiumsulfat verwendet werden.

Abhängig von der erforderlichen Verzögerungszeit, der Erstarrungscharakteristik und der anzustrebenden Volumenexpansion im Frühbereich kann das Verhältnis von reaktiven Aluminaten, berechnet als CA, und dem Gesamtsulfatgehalt zwischen etwa 5:1 und 1:1, vorzugsweise zwischen 3:1 und 2:1, liegen. Außerdem ist ein gewisser Sulfatgehalt zweckmäßig, um Monophasen und Ettringit zu stabilisieren und keine unerwünschten Umwandlungsprodukte wie Hydrogranat und Gehlenithydrat zur erhalten. Insgesamt bleibt man aber bei den vorstehend genannten Verhältnissen bei einem sehr niedrigen Sulfatgehalt, der eine Langzeitraumbeständigkeit sicherstellt.

In Kombination mit den aufgeführten reaktiven Calciumsilikaten können auch latenthydraulische Stoffe, beispielsweise Hochofenschlacke und puzzolanisch-hydraulische Stoffe verwendet werden.

Calciumhydroxid wird vorzugsweise in einer Menge von 1,3 bis 4 Gewichtsteilen verwendet und kann gegebenenfalls ganz oder teilweise als Branntkalk eingebracht werden Calciumhydroxid kann auch teilweise ersetzt werden durch ein lösliches Calciumcarbonat und/oder durch ein lösliches wasserhaltiges Magnesiumcarbonat.

Calciumsulfathalbhydrat wird vorzugsweise in einer Menge von 0,1 bis 1 Gewichtsteilen für Ausbesserungsmörtel und 0,1 bis 1,5 Gewichtsteilen für Puze, bei denen gegebenenfalls eine längere Topfzeit erwünscht ist, verwendet und beispielsweise als Stuckgips oder als Autoklavgips eingebracht.

Calciumsulfatanhydrit-II wird vorzugsweise in einer Menge von 0,8 bis 2 Gewichtsteilen für Ausbesserungsputze und 1,2 bis 5 Gewichtsteilen für Putze, um gegebenenfalls die Zweite Stufe, in der die Sekundärettringitbildung stattfindet, zu verstärken, verwendet, und zwar in Form von fein aufgemahlenem Naturanhydrit oder als Chemianhydrit, und zwar in schwer löslicher bis unlöslicher Form. Falls lösliche Anteil im Anhydrit vorhanden sind, ist dies bei der Dosierung des Calciumsulfathalbhydrates zu berücksichtigen.

Das Verhältnis zwischen reaktiven Aluminaten und Calciumhydroxid ist kleiner als 5, vorzugsweise kleiner 3, um die gewünschte Schnellerstarrungscharakteristik über die Monophasen zu erhalten.

Das Calciumsulfatanhydrit und/oder -halbhydrat kann partiell durch Calciumsulfatdihydrat ersetzt werden, um den Übergang zwischen den Formänderungsstufen zu glätten. Letzeres kann aber auch durch die Wahl des Anhydrits-II bewirkt werden.

Eine Erhöhung der Menge an reaktiven Calciumsilikaten erhöhrt, die Endfestigkeit. Eine Erhöhung der Menge an reaktiven Aluminaten erhöht die Früh- und Endfestigkeit. Eine Erhöhung des Calciumhydroxidgehalts erhöht im Zusammenhang mit einer Erhöhung der reaktiven Aluminate die erste Stufe der Frühfestigkeit und ergibt eine steilere Erstarrungscharakteristik. Eine Erhöhung des Calciumsulfathalbhydratgehaltes führt zu einer Verlängerung der Topfzeit und einer Abflachung der Erstarrungscharakteristik. Eine Erhöhung des Calciumsulfatanhydrit-II-Gehaltes im Zusammenhang mit einer Erhöhung der reaktiven Aluminate führt zu einer Erhöhung der Schwindkompensation im Frühbereich und damit der Frühfestigkeit. Eine Vergrößerung der Menge an eingesetztem organischem Verzögerer führt zu einer Verlängerung der Topfzeit und einer Abflachung der Erstarrungscharakteristik.

Die Mischung für Ausbesserungsmörtel sollte, um zusätzlich zu einer geringen Langzeitschwindung zu führen, einen Mindestgehalt an Calciumhydroxid abspaltenden Verbindungen, beispielsweise $C_3S$, enthalten, damit wenigstens bis zum Erreichen der Endfestigkeit ein hochalkalisches Milieu aufrechterhalten bleibt. Dies ist insbesondere bei luftporosierten Mörteln zweckmäßig, um den Ettringit vor Carbonatisierung zu schützen.

Für Ausbesserungsmörtel wird vorzugsweise ein Alkaligehalt, berechnet als $Na_2O$, unter 0,6 Gew.-% eingestellt.

Zur Erzielung der angestrebten Zusammensetzung kann man eine Mischung aus Portland- und Tonerdezement verwenden wobei die zuzusetzenden Mengen an Halbhydrat und Anhydrit-II sowie an Calciumhydroxid auf den Gehalt und die Art des Sulfats bzw. den Feikalkgehalt des Portland-Zements abzustimmen ist. Anstelle des Portlandzements läßt sich auch vorteilhaft ein Portlandzementklinker-auf Zementfeinheit gemahlen-einsetzen, wobei dann das gesamte Sulfat getrennt zu dosieren ist.

Als Zuschläge für die Mörtelmischung kommen beispielsweise Quarzsand, Quarzmehl, Kalksteinmehl, Flugachse, Leichtzuschläge, etwa Perlit, oder dergleichen infrage, die das Stützgerüst des Putzes bilden. Die Zuschläge sind in üblicher Weise auf eine stetige Sieblinie abzustimmen. Bei Verwendung des Putzes als Dekorputz, etwa Kratzputz, kann auch eine Ausfallkörnung gewählt werden. Auch können mineralische oder organische Fasern beigemengt werden. Im Putz kann ein Armierungsgewebe eingebettet sein, das beim Applizieren des Mörtels aufgebracht wird.

Als Zusatzmittel und -stoffe kommen beispielsweise Beschleuniger, insbesondere Alkalisalze (Lithiumverbindungen etwa $Li_2CO_3$, $Li(OH)$, $Na_2CO_3$, $Na(OH)$, $K_2CO_3$, $K(OH)$ oder Wasserglas, etwa K- bzw. Na-Wasserglas, in trockener kristalliner Form, wobei ein Alkaligehalt berechnet als $Na_2O$, unter 0,6 Gew.-Teilen bevorzugt wird), Hydrophobierungsmittel, Mittel zur Verbesserung des Wasserrückhaltevermögens, zur Verbesserung der Verarbeitbarkeit, Luftporenbildner, Pigmente, oder dergleichen infrage. Der Anteil des Bindemittels an der Mörtelmischung liegt im allgemeinen im Bereich zwischen etwa 10 und 50 Gewichtsteilen für übliche Rohdichten und zwischen etwa 30 und 60 Gewichtsteilen bei Wärmedämmputzen.

Die Dosierung des Anmachwassers bestimmt sich durch die Anforderungen an die Verarbeitbarkeit und den Untergrund, auf den der Putz aufzubringen ist.

Beispiel 1

Aus einer Trockenmörtelmischung bestehend aus

| | |
|---|---|
| silikatischem Zuschlag (mit abgestufter Körnung im Bereich 0-4 mm) | 67,45 Gew.-Teile |
| Portlandzement PZ 45 F | 25,38 Gew.-Teile |
| Tonerdezement (50% $Al_2O_3$) | 2,95 Gew.-Teile |
| Calciumsulfatanhydrit II (feingemahlen) | 1,42 Gew.-Teile |
| Calciumsulfathalbhydrat | 0,12 Gew.-Teile |
| Zitronensäuremonohydrat | 0,11 Gew.-Teile |
| Calciumhydroxid | 0,59 Gew.-Teile |
| gefälltes Calciumcarbonat | 0,46 Gew.-Teile |
| pulverförmiges Dispergiermittel | 1,00 Gew.-Teile |
| Verflüssiger | 0,20 Gew.-Teile |
| Hydrophobierungsmittel | 0,24 Gew.-Teile |
| Cellulosederivate | 0,08 Gew.-Teile |

läßt sich durch Zumischen von 11 Gew.-Teile Anmachwasser ein schnellerhärtender, schrumpfkompensierter Mörtel mit einer Verarbeitungszeit von 20 Minuten herstellen, der zum rißfreien Verfüllen von Ausbrüchen in Altbeton geeignet ist, und dort einen guten Verbund mit dem Untergrund ergibt. Die Flickstelle übersteht extreme Temperaturwechsel schadlos.

Beispiel 2

Aus einer Trockenmörtelmischung bestehend aus

| | |
|---|---|
| silikatischem Zuschlag (mit abgestufter Körnung im Bereich 0-0,3 mm) | 64,55 Gew.-Teile |
| Portlandzement PZ 45 F | 27,20 Gew.-Teile |
| Tonerdezement (50% $Al_2O_3$) | 3,20 Gew.-Teile |
| Calciumsulfatanhydrit II (feingemahlen) | 1,50 Gew.-Teile |
| Calciumsulfathalbhydrat | 0,13 Gew.-Teile |
| Zitronensäuremonohydrat | 0,13 Gew.-Teile |
| Calciumhydroxid | 0,63 Gew.-Teile |
| gefälltes Calciumcarbonat | 0,50 Gew.-Teile |
| pulverförmiges Dispergiermittel | 1,50 Gew.-Teile |
| Verflüssiger | 0,40 Gew.-Teile |
| Hydrophobierungsmittel | 0,25 Gew.-Teile |
| Cellulosederivate | 0,01 Gew.-Teile |

läßt sich durch Zumischen von 16 Gew.-Teile Anmachwasser ein besonders verarbeitungsfreundlicher, schnellerhärtender, schrumpfkompensierter Mörtel mit einer Verarbeitungszeit von 40 Minuten herstellen, der zum dünnschichtigen, rißfreien Beschichten grober Flickstellen geeignet ist und dort einen guten Verbund mit dem Untergrund ergibt. Die bearbeitete Fläche übersteht extreme Temperaturwechsel schadlos.

Das Frühverformungsverhalten ist derart, daß sich eine zweistufige Expansion (1 bis 1,5%) während der ersten Stunde ergibt, die der Bildung von Monophasen bzw. Ettringit entspricht.

Bezüglich der Definition der Calciumsulfatphasen, etwa Anhydrit-II, wird beispielsweise auf Winnacker, Küchler, Chemische Technologie, München 1983, Band III, S. 263 ff. verweisen. Portland- und Tolerdezementzusammensetzungen sind beispielsweise im Zement-Taschenbuch, Wiesbaden 1984, S. 49 ff., herausgegen vom Verein Deutscher Zementwerke, aufgeführt.

# EP 0 211 362 B2

**Patentansprüche**

1. Mischung zur Herstellung schnellerhärtender Mörten für Putze und Ausbesserungen, enthaltend Bindemittel, übliche Zuschläge und Zusätze, gekennzeichnet, durch einen Gehalt an

   a. 10 bis 40 Gew.-Teilen reaktive Calciumsilikate,
   b. 3 bis 8 Gew.-Teilen reaktive Aluminate, berechnet als CA,
   c. 0,8 bis 5 Gew.-Teilen zugesetztem Calciumhydroxid,
   d. 0,05 bis 2 Gew.-Teilen Calciumsulfathalbhydrat und/oder -anhydrit-III,
   e, 0,4 bis 6,5 Gew.-Teilen Calciumsulfatanhyhdrit-II,
   f. 0,03 bis 0,5 Gew.-Teilen organischem, die Keimbildung und das Wachstum von Calciumaluminumsulfathydrat hemmendem Abbindeverzögerer,

   wobei das Verhältnis der Komponenten b:c kleiner als 5 ist,

   derart, daß eine Reaktionskette über die folgenden Reaktionsprodukte:
   Primärttringit, Monophasen (Calciumaluminatmonosulfat), Sekundärettringit und Calciumhydrosilikat abläuft.

2. Mischung nach Anspruch 1, gekennzeichnet, durch 15 bis 30, insbesondere 15 bis 25 Gew.-Teile reaktive Calciumsilikate und/oder

   4 bis 7, insbesondere 4 bis 6 Gew.-Teile reaktive Aluminate, berechnet als CA, und/oder
   1,3 bis 4 Gew.-Teile Calciumhydroxid und/oder
   0,1 bis 1, insbesondere 0,5 bis 1, bzw. 0,1 bis 1,5, insbesondere 0,5 bis 1,5 Gew.-Teile Calciumsulfathalbhydrat bzw. -anhydrit-III für Mörtel für Ausbesserungen bzw. Putze und/oder
   0,8 bis 2 bzw. 1,2 bis 5, insbesondere 1,5 bis 5 Gew.-Teile Calciumsulfatanhydrit-II für Mörtel für Ausbesserungen bzw. Putze und/oder
   0,05 bis 0,2 insbesondere bis 0,15 Gew.-Teile organischen Abbindeverzögerer.

3. Mischung nach Anspruch 1 oder 2, dadurch abgewandelt, daß das Calciumsulfatanhydrit und/oder -halbhydrat partielle durch Calciumsulfatdihydrat ersetzt ist.

4. Mischung nach einem der Ansprüche 1 bis 3, dadurch abgewandelt, daß das Calciumhydroxid ganz oder teilweise durch Calciumoxid ersetzt ist.

5. Mischung nach einem der Ansprüche 1 bis 4, dadurch abgewandelt, daß das Calciumhydroxid teilweise ersetzt ist durch ein lösliches Calciumcarbonat.

6. Mischung nach einem der Ansprüche 1 bis 5, dadurch abgewandelt, daß das Calciumhydroxid teilweise ersetzt ist durch lösliches, wasserhaltiges Magnesiumcarbonat.

7. Mischung nach einem der Ansprüche 1 bis 6, dadurch gekennzeichnet, daß zur Erzeilung einer geringen Langzeitschwindung Calciumhydroxid wenigstens bis zum Erreichen der Endfestigkeit abspaltende Verbindungen enthalten sind.

8. Mischung nach einem der Ansprüche 1 bis 7, dadurch gekennzeichnet, daß sie als organischen Abbindeverzögerer Oxycarbonsäure(n), insbesondere Zitronensäure, oder deren Salz(e) enthält.

9. Mischung nach einem der Ansprüche 1 bis 8, gekennzeichnet, durch einen Alkaligehalt, berechnet als $Na_2O$, unter 0,6 Gew.-Teilen.

10. Mischung nach einem der Ansprüche 1 bis 9, dadurch gekennzeichnet, daß das Verhältnis b:c kleiner 3 eingestellt ist.

**Claims**

1. A mixture for making quick-setting mortar for plaster and repairs and containing binders, conventional aggregates

6

and additives, characterised in that it contains:

a. 10 to 40 parts by weight of reactive calcium silicates,
b. 3 to 8 parts by weight of reactive aluminates, calculated as CA,
c. 0.8 to 5 parts by weight of added calcium hydroxide,
d. 0.05 to 2 parts by weight of calcium sulphate hemihydrate and/or anhydrite-III,
e. 0.4 to 6.5 parts by weight of calcium sulphate anhydrite-II, and
f. 0.03 to 0.5 parts by weight of organic setting retarders which inhibit nucleation and the growth of calcium aluminum sulphate hydrate,

the ratio of components b:c being less than 5,
so that the reaction sequence is via the following reaction products: primary ettringite, monophases (calcium aluminate monosulphate), secondary ettringite and calcium hydrosilicate.

2. A mixture according to Claim 1, characterised by

15 to 30, more particularly 15 to 25 parts by weight of reactive calcium silicates and/or
4 to 7, more particularly 4 to 6 parts by weight of reactive aluminates, calculated as CA and/or
1.3 to 4 parts by weight of calcium hydroxide and/or
0.1 to 1, more particulary 0.5 to 1, or 0.1 to 1.5, more particularly 0.5 to 1.5 parts by weight of calcium sulphate hemihydrate or anhydrite-III for mortar for repairs or plaster and/or
0.8 to 2 or 1.2 to 5, more particularly 1.5 to 5 parts by weight of calcium sulphate anhydrite-II for mortar for repairs or plaster and/or
0.05 to 0.2, more particularly up to 0.15 parts by weight of organic setting retarders.

3. A mixture according to Claim 1 or 2, altered by partially replacing calcium sulphate anhydrite and/or hemihydrate by calcium sulphate dihydrate.

4. A mixture according to any of Claims 1 to 3, altered by replacing calcium hydroxide partly or completely by calcium oxide.

5. A mixture according to any of Claims 1 to 4, altered by partly replacing calcium hydroxide by soluble calcium carbonate.

6. A mixture according to any of Claims 1 to 5, altered by partly replacing calcium hydroxide by soluble hydrated magnesium carbonate.

7. A mixture according to any of Claims 1 to 6, characterised in that, in order to obtain low long-term shrinkage, it contains compounds which split off calcium hydroxide, at least until the final strength is reached.

8. A mixture according to any of Claims 1 to 7, characterised in that it contains one or more oxycarboxylic acids. more particularly citric acid or salts thereof, as organic setting retarders.

9. A mixture according to any of Claims 1 to 8, characterised by an alkali-metal content, calculated as $Na_2O$, of less than 0.6 parts by weight.

10. A mixture according to any of Claims 1 to 9, characterised in that the ratio b:c is set at less than 3.


## Revendications

1. Mélange pour la préparation de mortier durcissant rapidement pour crépis et réparations, contenant des liants, des agrégats et additifs habituels, caractérisé en ce qu'il contient:

a) 10 à 40 parties en poids de silicates de calcium réactifs,
b) 3 à 8 parties en poids d'aluminates réactifs, calculées en CA,
c) 0,8 à 5 parties en poids d'hydroxyde de calcium ajouté, d) 0,05 à 2 parties en poids d'hémihydrates et/ou d'anhydrite-III de sulfate de calcium,

e) 0,4 à 6,5 parties en poids d'anhydrite-II de sulfate de calcium,

f) 0,03 à 0,5 partie en poids d'un retardateur de prise organique inhibant la formation de germe et la croissance d'hydrate de sulfate de calcium et d'aluminium,

le rapport des constituants b:c étant inférieure à 5, de telle sorte qu'une chaîne de réactions se déroule en passant par les produits de réaction suivants: ettringite primaire, monophases (monsulfate de calcium et d'aluminium), ettringite secondaire et hydrosilicate de calcium.

2. Mélange selon la revendication 1, caractérisé en ce qu'il contient:

15 à 30, en particulier 15 à 25 parties en poids de silicates de calcium réactifs et/ou

4 à 7, en particulier 4 à 6 parties en poids d'aluminates réactifs, calculées en CA, et/ou

1,3 à 4 parties en poids d'hydroxyde de calcium, et/ou

0,1 à 1, en particulier 0,5 à 1, ou 0,1 à 1,5, en particulier 0,5 à 1,5 partie en poids d'hémihydrate ou d'anhydrite-III de sulfate de calcium pour mortier pour réparations ou crépis, et/ou

0,8 à 2 ou 1,2 à 5, en particulier 1,5 à 5 parties en poids d'anhydrite-II de sulfate de calcium pour mortier pour réparations ou crépis et/ou

0,05 à 0,2, en particulier jusqu'À 0,15 partie en poids de retardateur de prise organique.

3. Mélange selon la revendication 1 ou 2, caractérisé en ce que l'anhydrite et/ou l'hémihydate de sulfate de calcium sont remplacés partiellement par du dihydrate de sulfate de calcium.

4. Mélange selon l'une quelconque des revendications 1 à 3, caractérisé en ce que l'hydroxyde de calcium est remplacé en tout ou partie par de l'oxyde de calcium.

5. Mélange selon l'une quelconque des revendications 1 à 4, caractérisé en ce que l'hydroxyde de calcium est remplacé partiellement par un carbonate de calcium soluble.

6. Mélange selon l'une quelconque des revendications 1 à 5, caractérisé en ce que l'hydroxyde de calcium est remplacé partiellement par un carbonate de magnésium soluble, hydraté.

7. Mélange selon l'une quelconque des revendications 1 à 6, caractérisé en ce qu'il contient pour obtenir un faible retrait à long terme, des composés libérant de l'hydroxyde de calcium au moins jusqu'à l'obtention de la résistance finale.

8. Mélange selon l'une quelconque des revendications 1 à 7, caractérisé en ce qu'il contient comme retardateur de prise organique un ou plusieurs acides oxycarboxyliques, en particulier l'acide citrique ou ses sels.

9. Mélange selon l'une quelconque des revendications 1 à 8, caractérisé par une teneur en alcali, calculée en $Na_2O$, inférieure à 0,6 partie en poids.

10. Mélange selon l'une quelconque des revendicationsd 1 à 9, caractérisé en ce que le rapport b:c est ajusté à une valeur inférieure à 3.